# EUROPÄISCHE PATENTSCHRIFT

(11) **EP 1 609 220 B1**
(45) Veröffentlichungstag und Bekanntmachung des Hinweises auf die Patenterteilung: **08.01.2014**
(21) Anmeldenummer: 03773488.6
(22) Anmeldetag: 02.10.2003
(51) Int. Cl.: G01K 7/12, H01R 13/66

(54) **TEMPERATURAUSGLEICHSELEMENT FÜR EINE ANSCHLUSSEINHEIT**
TEMPERATURE COMPENSATION ELEMENT FOR A CONNECTION UNIT
ELEMENT DE COMPENSATION DE TEMPERATURE POUR UNE UNITE DE CONNEXION

(30) Priorität: 28.03.2003 DE 10314406
(43) Veröffentlichungstag der Anmeldung: 28.12.2005
(73) Patentinhaber: Siemens Aktiengesellschaft, 80333 München (DE)
(72) Erfinder: KLUMPP, Wolfgang, 77855 Achern (DE); MAIER, Willi, 77728 Oppenau (DE); SCHNEIDERHEINZE, Wigand, 76774 Leimersheim (DE)
(86) Internationale Anmeldenummer: PCT/DE2003/003288
(87) Internationale Veröffentlichungsnummer: WO 2004/088797

(56) Entgegenhaltungen:
- US-A- 5 590 058

## Beschreibung

Die Erfindung betrifft ein Temperaturausgleichselement für eine Anschlusseinheit, an welche Leitungen anschließbar sind.

Aus dem Siemens-Katalog ST 70, Seite 4/114, Ausgabe 2003 ist eine Anschlusseinheit in Form eines Frontsteckers bekannt, an welche über Leitungen Sensoren oder Aktoren anschließbar sind. Dieser Frontstecker ist z. B. in eine Temperaturmessbaugruppe steckbar, welcher über mehrere Eingangskanäle Temperaturspannungswerte von Sensoren zuführbar sind. Um die Temperatur eines Thermoelementes möglichst genau zu messen, ist es erforderlich, eine Vergleichstemperatur an einer Messstelle in der Nähe der Anschlussklemme des Thermoelementes präzise zu erfassen. Aus dieser Vergleichstemperatur und der Temperatur des Thermoelementes an der Messstelle des zu steuernden technischen Prozesses wird die Absoluttemperatur an dieser Messstelle ermittelt. Aufgrund der geometrischen Ausdehnung der Anschlussklemmen bei einer mehrkanaligen Temperaturmessbaugruppe kann die Vergleichstemperatur für jeden Kanal nicht exakt ermittelt werden, da gewöhnlich die Baugruppe nur eine Messstelle zur Erfassung der Vergleichstemperatur für alle Anschlussklemmen aufweist. Dies führt zu Messungenauigkeiten, insbesondere deshalb, weil die Anschlussklemmen unterschiedlichen thermischen Einflüssen durch Bauelemente der Leiterplatte der Baugruppe ausgesetzt sind.

EP 0 605 201 A1 offenbart ein Temperaturausgleichselement für eine Anschlusseinheit gemäß dem Oberbegriff des Anspruchs 1, wobei Maßnahmen vorgesehen sind, zum Einsatz von modularen Schraubanschlussblöcken.

Aus DE 198 26 212 C1 ist eine Anschlusseinrichtung für Thermoelemente bekannt. Mittels geeigneter Maßnahmen wird eine besonders einfache Herstellung dieser Anschlusseinrichtung ermöglicht.

Der vorliegenden Erfindung liegt die Aufgabe zugrunde, ein Temperaturausgleichselement für eine Anschlusseinheit der eingangs genannten Art zu schaffen, welches ein Temperaturgefälle an den Anschlussklemmen der Anschlusseinheit minimiert.

Diese Aufgabe wird durch die im Anspruch 1 angegebenen Maßnahmen gelöst.

Auf dem Streifen ist ein temperaturabhängiger Widerstand angeordnet. Für den Fall, dass die Anschlussfahnen des Temperaturausgleichselements an den Anschlüssen der Anschlusseinheit angeschlossen sind, kann eine geeignete Auswerteschaltung der Anschlusseinheit aus dem Widerstandswert des temperaturabhängigen Widerstandes die exakte Vergleichstemperatur für alle Anschlüsse der Anschlusseinheit ermitteln.

In einer Ausgestaltung der Erfindung gemäß den im Anspruch 2 angegebenen Maßnahmen wird die Verminderung des Temperaturgefälles an den Anschlussklemmen der Anschlusseinheit erhöht.

Durch die im Anspruch 3 angegebenen Maßnahmen wird eine einfache Herstellung des Temperaturausgleichselements ermöglicht. Zur Herstellung der beiden miteinander verbundenen Streifen genügt eine rechteckige Kupferplatte, die entsprechend gefalzt wird.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: ein Temperaturausgleichselement in einer Ansicht von oben und
- Figur 2: eine seitliche Ansicht des Temperaturausgleichselements gemäß Figur 1.

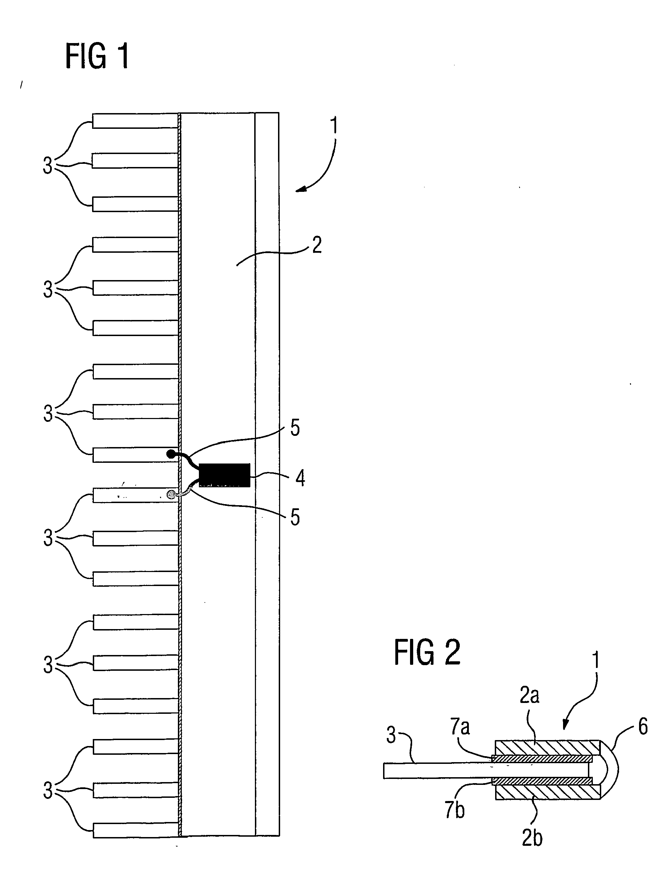

In Figur 1 ist mit 1 ein Temperaturausgleichselement bezeichnet, welches einen massiven thermisch leitenden Streifen 2, vorzugsweise eine Kupferschiene, umfasst. Im Wesentlichen rechtwinklig zu diesem Streifen sind in einer Reihe angeordnete, elektrisch leitende Anschlussfahnen 3 auf dem Streifen 2 verpresst oder verklebt, wobei zwischen dem Streifen 2 und den Anschlussfahnen 3 sowie zwischen den Anschlussfahnen 3 Isolationsmaterial aus thermisch leitendem Material vorgesehen ist. Dadurch sind die Anschlussfahnen 3, welche vorzugsweise ebenfalls aus Kupfer bestehen, gegenüber dem Streifen 2 und die Anschlussfahnen 3 gegeneinander elektrisch isoliert. Der Abstand der in einer Reihe angeordneten Anschlussfahnen 3 ist so gewählt, dass die Anschlussfahnen 3 in korrespondierende Anschlussklemmen eines Frontsteckers einer Baugruppe der Steuerungstechnik kontaktierbar sind. Ein derartiger Frontstecker ist beispielsweise aus der DE 195 14 767 C1 oder DE 195 14 768 C2 bekannt. Dieser Frontstecker ist auf eine Baugruppe steckbar und weist Anschlussklemmen in Form von Schraubklemmen auf, an welche mit Sensoren verbundene Prozessleitungen anschließbar sind. Um eine exakte Vergleichstemperatur für alle Anschlussklemmen des Frontsteckers ermitteln zu können, ist der Streifen 2 mit einem temperaturabhängigen Widerstand 4 versehen, dessen Anschlüsse 5 mit jeweils einer Anschlussfahne 3 verbunden sind. Für den Fall, dass die Anschlussfahnen 3 mit den Anschlussklemmen des Frontsteckers verschraubt sind und der Frontstecker in die Baugruppe gesteckt ist, kann eine geeignete Auswerteschaltung der Baugruppe die Vergleichstemperatur aus dem Widerstandswert des temperaturabhängigen Widerstandes ermitteln.

Im Folgenden wird auf Figur 2 verwiesen, in welcher das Temperaturausgleichselement gemäß Figur 1 in einer seitlichen Ansicht dargestellt ist. Um das Temperaturgefälle an den Anschlussklemmen des Frontsteckers weiter zu vermindern, weist das Temperaturausgleichselement 1 zwei thermisch leitende Streifen 2a, 2b auf, die über ein thermisch leitendes Verbindungsstück 6 miteinander verbunden sind. Die Streifen 2a, 2b sind jeweils über eine Isolationsschicht 7a, 7b aus thermisch leitendem Material gegenüber den Anschlussfahnen 3 elektrisch isoliert, um Kurzschlüsse zwischen den Anschlussfahnen 3 und den metallischen Streifen 2 zu vermeiden.

## Patentansprüche

1. Temperaturausgleichselement für eine Anschlusseinheit, an welche Leitungen anschließbar sind, wobei das Temperaturausgleichselement (1) aus mindestens einem ersten Streifen (2; 2a, 2b) eines thermisch leitenden Materials besteht, auf welchem im Wesentlichen rechtwinklig zu dem Streifen in einer Reihe angeordnete, thermisch leitende Anschlussfahnen (3) angeordnet sind, welche jeweils mit korrespondierenden Anschlussklemmen der Anschlusseinheit kontaktierbar sind, wobei die Anschlussfahnen (3) mit dem Streifen (2; 2a) thermisch leitend verbunden sind, **dadurch gekennzeichnet, dass** der mindestens eine Streifen (2; 2a, 2b) und die Anschlussfahnen (3) elektrisch leitend sind, wobei die Anschlussfahnen (3) elektrisch gegenüber dem mindestens einen Streifen (2; 2a, 2b) isoliert sind, und dass auf dem mindestens einen Streifen (2; 2a, 2b) ein temperaturabhängiger Widerstand (4) angeordnet ist, dessen Anschlüsse (5) mit jeweils einer der Anschlussfahnen (3) kontaktieren.

2. Temperaturausgleichselement nach Anspruch 1, **dadurch gekennzeichnet, dass** das Temperaturausgleichselement (1) mit einem dem ersten Streifen (2; 2a) gegenüberliegenden zweiten Streifen (2; 2b) eines thermisch leitenden Materials versehen ist.

3. Temperaturausgleichselement nach Anspruch 1 oder 2, **dadurch gekennzeichnet, dass** der erste und zweite Streifen (2a, 2b) an der den Anschlussfahnen (3) gegenüberliegenden Seite miteinander verbunden sind.

## Claims

1. Temperature compensation element for a connection unit, to which lines can be connected, wherein the temperature compensation element (1) consists of at least a first strip (2; 2a, 2b) of thermally-conductive material on which, essentially at right angles to the strip, arranged in a row, are thermally-conductive terminal lugs (3), which can in each case be contacted with corresponding terminals of the connection unit, wherein the terminal lugs (3) are connected to the strip (2; 2a) in a thermally-conductive manner, **characterised in that** the at least one strip (2; 2a, 2b) and the terminal lugs (3) are electrically-conducting, wherein the terminal lugs (3) are electrically isolated from the at least one strip (2; 2a, 2b), and that on the at least one strip (2; 2a, 2b) a temperature-dependent resistor (4) is arranged, of which the terminals (5) make contact with one of the terminal lugs (3) in each case.

2. Temperature compensation element according to claim 1, **characterised in that** the temperature compensation element (1) is provided with a second strip (2; 2b) of a thermally-conductive material opposite the first strip (2; 2a).

3. Temperature compensation element according to claim 1 or 2, **characterised in that** the first and second strip (2a, 2b) are connected to each other on the side opposite the terminal lugs (3).

## Revendications

1. Elément de compensation de température pour une unité de connexion, à laquelle des lignes peuvent être connectées, l'élément ( 1 ) de compensation de température étant constitué au moins d'une première bande ( 2, 2a, 2b ) d'un matériau conducteur thermiquement sur laquelle sont disposées sensiblement à angle droit par rapport à la bande des barrettes ( 3 ) de connexion conductrices thermiquement et disposées en une rangée, barrettes qui peuvent être mises en contact respectivement avec des bornes de connexion correspondantes de l'unité de connexion, les barrettes ( 3 ) de connexion étant reliées d'une manière conductrice thermiquement à la bande ( 2, 2a ), **caractérisé en ce que** la au moins une bande ( 2, 2a, 2b ) et les barrettes ( 3 ) de connexion sont conductrices de l'électricité, les barrettes ( 3 ) de connexion étant isolées électriquement par rapport à la au moins une bande ( 2, 2a, 2b ) et **en ce que** sur la au moins une bande ( 2, 2a, 2b ) est disposée une résistance ( 4 ) qui dépend de la température et dont les bornes ( 5 ) sont en contact avec respectivement l'une des barrettes ( 3 ) de connexion.

2. Elément de compensation de température suivant la revendication 1, **caractérisé en ce que** l'élément ( 1 ) de compensation de température est pourvu d'une deuxième bande ( 2, 2b ) opposée à la première bande ( 2, 2a ) d'un matériau conducteur thermiquement.

3. Elément de compensation de température suivant la revendication 1 ou 2, **caractérisé en ce que** la première et la deuxième bandes ( 2a, 2b ) sont reliées l'une à l'autre sur des côtés opposés des barrettes ( 3 ) de connexion.
